(19) Europäisches Patentamt
European Patent Office
Office européen des brevets

(11) Veröffentlichungsnummer: **0 078 051**
**B1**

# (12) EUROPÄISCHE PATENTSCHRIFT

(45) Veröffentlichungstag der Patentschrift: **17.09.86**

(51) Int. Cl.⁴: **C 01 B 25/46**, C 22 B 3/00

(21) Anmeldenummer: **82109876.1**

(22) Anmeldetag: **26.10.82**

(54) **Verfahren zur Abtrennung von Schwermetallbestandteilen aus Zwischenprodukten der Fabrikation von Phosphordüngemitteln.**

(30) Priorität: **28.10.81 DE 3142666**
**13.03.82 DE 3209183**

(43) Veröffentlichungstag der Anmeldung:
**04.05.83 Patentblatt 83/18**

(45) Bekanntmachung des Hinweises auf die Patenterteilung:
**17.09.86 Patentblatt 86/38**

(84) Benannte Vertragsstaaten:
**BE DE FR IT NL SE**

(56) Entgegenhaltungen:
**EP - A - 0 023 428**
**DE - A - 3 002 353**
**US - A - 2 523 147**

**CHEMICAL ABSTRACTS, Band 94, Nr. 22, 1. Juni 1981, Seite 148, Nr. 177487f, Columbus, Ohio, US**
**CHEMICAL ABSTRACTS, Band 93, Nr. 18, 3. November 1980, Seite 483, Nr. 175529b, Columbus, Ohio, US R. FITOUSSI u.a.: "Uranium (VI) and ruthenium extraction by dialkyldithio-phosphoric acids"**
**J.L. Smith, Cadmium Seminar, Rosslyn, Virginia, 1980, Possible Means for Controlling cadmium levels in phosphate fertilizers**

(73) Patentinhaber: **HOECHST AKTIENGESELLSCHAFT, Postfach 80 03 20, D-6230 Frankfurt am Main 80 (DE)**

(72) Erfinder: **von Plessen, Helmold, Dr., Kugelherrnstrasse 16, D-6240 Königstein/Taunus (DE)**
Erfinder: **Schimmel, Günther, Dr., Am Beissel 27, D-5042 Erftstadt (DE)**
Erfinder: **Kleiner, Hans-Jerg, Dr., Altkönigstrasse 11a, D-6242 Kronberg/Taunus (DE)**

EP 0 078 051 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Abtrennung von Cadmium und Quecksilber aus Rohphosphorsäuren, die durch Aufschluss von Rohphospaten mit Salpetersäure gewonnen und aus denen die Hauptmenge des gebildeten Calciumnitrats entfernt wurden.

Phosphorhaltige Düngemittel werden vielfach durch sauren Aufschluss von Phosphorit oder Apatit hergestellt. Unter der Einwirkung von Mineralsäure wird das schwerlösliche Tricalciumphosphat des Rohphosphats zersetzt. Die Calciumsalze der eingesetzten Mineralsäuren müssen anschliessend abgetrennt werden, um die entstandene rohe Phosphorsäure als Produkt zu erhalten. Im Rohphosphat enthaltene metallische Verunreinigungen wie Cd, Pb, Hg und As verbleiben grösstenteils in der Phosphorsäure. Da diese Säure nicht für alle Verwendungszwecke geeignet ist, wurden bereits zahlreiche Versuche unternommen, um sie von unerwünschten metallischen Verunreinigungen zu befreien. Für die Verarbeitung roher Phosphorsäure zu Düngemitteln boten diese Vorschläge aber bisher keinen technisch günstigen Weg.

So berichtet AMDEL Bull 1976 (19) 1–10, von der Beseitigung von Cadmium aus Rohphosphat durch Kalzinierung, ein wirtschaftlich sehr aufwendiges Verfahren. Nach der DE-A-2 422 902 kann Cadmium durch Druckfällung mit Schwefelwasserstoff beseitigt werden. Ausser der Erschwernis, mit Schwefelwasserstoff unter Druck arbeiten zu müssen, ist für die Durchführung des Verfahrens die Einhaltung bestimmter Konzentrationen an $P_2O_5$ erforderlich. Die japanische Offenlegungsschrift 1979/37 096 schlägt ein Verfahren vor, bei dem zweistufig durch Behandlung mit einem wasserlöslichen organischen Lösungsmittel und Destillation sowie ggf. durch anschliessende Extraktion Phosphorsäure gereinigt werden soll. Auch die Cadmiumabtrennung mittels Ionenaustauscher ist beschrieben worden (Japanische Offenlegungsschrift 1978/56 190). Auch die Festbettelektrolyse (Metalloberfläche 34 (1980) 494–501) bietet bisher keinen Weg zur Lösung des Problems.

Die vorgeschlagenen Verfahren sind insbesondere ungeeignet, um die beim Aufschluss von Rophosphat mittels 60%iger Salpetersäure nach dem bekannten Odda-Verfahren entstehende rohe Phosphorsäure von Schwermetallionen zu befreien.

Beim Odda-Prozess wird die stark salpetersäurehaltige Nassphosphorsäure des Aufschlusses zur Abscheidung des Calciumnitrats, dessen Löslichkeit stark temperaturabhängig ist, abgekühlt und das Calciumnitrat als Tetrahydrat abgetrennt. Im Rohphosphat vorhandene Schwermetallionen wie Cd, Pb, Hg und As verbleiben grossenteils in der Lösung des Aufschlusses, der sogenannten Muttersäure. Die Muttersäure enthält gewöhnlich 15–20 Gew.-% $P_2O_5$, 30–35 Gew.-% $HNO_3$ und 7–10 Gew.-% CaO.

Anschliessend wird üblicherweise die Muttersäure stufenweise mit Ammoniak unter Verdampfung von Wasser neutralisiert und der entstehende Kristallbrei mit Kaliumsalzen vermischt und zu Düngemitteln granuliert.

Der vorliegenden Erfindung lag somit die Aufgabe zugrunde, ein Verfahren zu entwickeln, mit dessen Hilfe schwermetallarme Düngemittel nach dem Odda-Prozess hergestellt werden können.

Es wurde nun überraschenderweise gefunden, dass man diese Aufgabe vorteilhaft dadurch lösen kann, dass man die bei dem Odda-Verfahren resultierende Muttersäure mit Ammoniak auf einen pH-Wert in dem Bereich von 0,5–1,5, insbesondere 0,6–1,2, einstellt und die so erhaltene phosphorsaure Lösung, vorzugsweise im Gegenstrom, mit einem mit Wasser nicht oder nur wenig mischbaren Lösungsmittel extrahiert, wobei als Lösungsmittel eine Phosphor-Verbindung aus der Gruppe der Dithiophosphorsäure-di-ester, Dithiophosphonsäure-O-ester und Dithiophosphinsäuren ausgewählt und vorteilhafterweise im Gemisch mit einem inerten organischen Verdünnungsmittel angewandt wird.

Die Einhaltung des obengenannten pH-Wert-Bereiches ist vor allem für die Extraktion und Abtrennung des Cadmiums besonders wichtig. In Bereichen höherer pH-Werte wird andererseits eine Extraktion der Muttersäure dadurch behindert, dass gleichzeitig komplexe Niederschläge aus Phosphaten, Kieselgel, Calcium-, Magnesium- und Aluminium-Verbindungen auftreten.

Zur Messung der pH-Werte in den konzentriert mineralsauren Lösungen werden Glaselektroden, zweckmässigerweise Einstabmessketten mit dem Bezugsystem Ag/AgCl, Bezugselektrolyt 3m KCl + AgCl oder 3,5m KCL, verwendet. Es können speziell Schwefelwasserstoff-sichere Einstabmessketten verwendet werden, die z.B. mit zwei hintereinander geschalteten, durch Diaphragmen getrennten Elektrolytkammern ausgestattet sind. Die pH-Werte müssen in der konzentrierten Lösung ohne Verdünnung und bei Raumtemperatur gemessen werden.

Es ist bekannt, dass Dithiophosphorsäuredialkylester (vgl. US. Patente 2 523 147, 2 705 694 und 2 798 880) und Dithiophosphinsäuren sowie Dithiophosphonsäure-O-ester (vgl. FR-A-1 396 093 und US-A-3 300 409) leicht oxidierbar sind und deshalb als Antioxidantien eingesetzt werden. Es musste daher erwartet werden, dass die Anwesenheit von Oxidationsmitteln, wie hohe Konzentrationen an Nitrationen in saurer Lösung, ein Hindernis für eine extraktive Behandlung der obengenannten Muttersäure mittels der erfindungsgemässen Extraktionsmittel darstellt. Die Muttersäure enthält zudem vom Aufschluss her ausserdem noch Nitroxide ($NO_x$).

Die erfindungsgemäss als Extraktionsmittel geeigneten Phosphorverbindungen besitzen die allgemeine Formel I,
worin $R_1$ und $R_2$ gleich oder verschieden sind und gesättigte oder ungesättigte aliphatische, araliphatische oder aromatische Kohlenwasserstoffreste mit 1 bis 18 C-Atomen, die gegebenenfalls substituiert sind, und $R_1$ und $R_2$ zusammen 6 bis

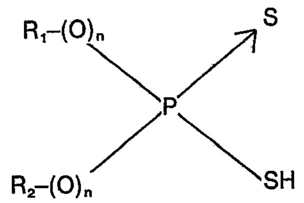

(I)

36 C-Atome, vorzugsweise 8–24 C-Atome aufweisen sowie gegebenenfalls auch gemeinsam einen gegebenenfalls substituierten zweibindingen Rest bilden und n jeweils unabhängig voneinander die Zahl 0 oder 1 bedeuten.

Als Beispiele für erfindungsgemässe Extraktionsmittel der Formel I seien u.a. genannt:
Dithiophosphorsäure-di-(2-ethyl-hexyl)-ester
Dithiophosphorsäure-di-isotridecyl-ester
Dithiophosphorsäure-di-sek. butyl-ester
Dithiophosphorsäure-di-kresyl-ester
Cyclohexyl-dithiophosphonsäure-O-n-butylester
Di-Cyclohexyl-dithiophosphinsäure
Di-phenyl-dithiophosphinsäure
Di-(tricyclo-(5,2,1,0$^{26}$)decenyl)-dithiophosphinsäure
Naphthalin-2-dithio-phosphonsäure-O-ethylester.

Die Menge an erfindungsgemäss einzusetzenden Extraktionsmitteln ist nicht kritisch und kann in weiten Bereichen schwanken. Vorzugsweise werden sie jedoch in Mengen von 0,05–50 Gew.-%, insbesondere in Mengen von 0,1–10 Gew.-%, bezogen auf die Menge an Muttersäure, eingesetzt.

Die erfindungsgemässen Extraktionsmittel können einzeln oder als Gemisch eingesetzt werden. Bei den Verbindungen der Formel I mit substituierten Resten $R_1$ und $R_2$ kommen vorzugsweise Substitutionen durch Halogen, Hydroxy-, Alkoxy-, Carboxy- oder $NO_2$-Gruppen infrage, sofern die resultierenden Reste insgesamt hydrophob genug sind, damit die Verbindungen der Formel I im gewünschten Grade in Wasser schwer-löslich sind.

Bevorzugte Verbindungen der Formel I sind ferner solche worin $R_1$ und $R_2$ = $(C_1–C_{18})$-Alkyl, $(C_5–C_6)$-Cycloalkyl, Phenyl-$(C_1–C_2)$-alkyl, Phenyl, durch $(C_1–C_4)$-Alkyl substituiertes Phenyl, Naphthyl, die jeweils ggf. durch Halogen, Hydroxy, Alkoxy, Carboxy oder $NO_2$ substituiert sind, oder Tricyclodecenyl bedeuten, wobei $R_1$ und $R_2$ zusammen 8 bis 24 C-Atome aufweisen.

Der in Bezug auf die erfindungsgemässen Phosphorverbindungen gebrauchte Begriff der Schwerlöslichkeit in Wasser bedeutet jedoch nicht, dass die betreffende Verbindung vollkommen unlöslich sein muss, sondern lediglich, dass die Verbindung gegenüber die Phase der salpetersäurehaltigen Phosphorsäure eine genügende Nichtmischbarkeit aufweisen muss, um eine Trennung der Flüssigkeiten in zwei verschiedene Phasen zu ermöglichen.

Obgleich die erfindungsgemässen Phosphorverbindungen der Formel I in unverdünnter, flüssiger Form hervorragend zur Extraktion befähigt sind, ist es vorzuziehen, sie im Gemisch mit inerten, organischen Verdünnungsmitteln zu verwenden, um eine noch bessere Handhabung und Regelung der Extraktion zu erreichen, und u.a. auch aus Wirtschaftlichkeitsgründen.

Bei den zur erfindungsgemässen Verwendung geeigneten organischen Verdünnungsmitteln handelt es sich um solche organischen Lösungsmittel, in denen die Verbindungen der Formel I löslich sind, die ausserdem praktisch unlöslich in den auf pH 0,5 bis 1,5 eingestellten, rohen, Nitrationen enthaltenden Phosphorsäurelösungen sind und sich den letzteren gegenüber chemisch indifferent verhalten. Es kommen hierbei eine grosse Zahl verschiedener organischer Lösungsmittel infrage, wie bspw. Petroleumbenzin, Kerosin, Heizöl extra leicht, Dekahydronaphthalin, Tetrabromäthan oder Xylol. Das Mengenverhältnis der Verbindungen der Formel I zu inertem organischem Lösungsmittel kann in weiten Grenzen variiert werden. Bevorzugt sind Gewichtsverhältnisse von 1:2 bis 1:50, insbesondere 1:5 bis 1:20.

Das erfindungsgemässe Extraktionsverfahren sowie auch die Rückextraktions- oder Entfernungsverfahren zur Eliminierung der Cadmium- oder Quecksilber-Verbindungen aus dem Extraktionsmittel zur Wiederverwendung des letzteren können kontinuierlich oder diskontinuierlich bzw. ansatzweise durchgeführt werden. Bei diskontinuierlicher Verfahrensweise kann es erforderlich sein, die Extraktion so oft zu wiederholen, bis das gewünschte Ausmass an Extraktionseffekt erreicht ist.

Bei kontinuierlicher Verfahrensweise kann z.B. vorteilhaft im Gegenstrom der phosphorsauren Lösungen zur Extraktionsmittelphase gearbeitet werden.

Die Extraktion kann in einem breiten Temperaturbereich bei niedriger oder erhöhter Temperatur durchgeführt werden, vorzugsweise zwischen 5 und 120 °C, insbesondere bei 10 bis 90 °C. Besonders bevorzugt sind Normaltemperatur und Umgebungstemperatur. Auch kann bei Normaldruck oder unter erhöhtem Druck gearbeitet werden. Zur Verbesserung der Phasentrennung kann das zweiphasige Extraktionsgemisch auf eine Zentrifuge, z.B. einen Separator, gegeben werden.

Für den Fachmann war keineswegs vorhersehbar, dass es durch das erfindungsgemässe Verfahren gelingen würde, aus konzentrierten phosphorsauren Lösungen, deren Eigenschaft, mit Schwermetallionen stabile Komplexe zu bilden, bekannt ist, mit einem hohen Verteilungskoeffizienten die Schwermetallionen, wie z.B. diejenigen des Cadmiums, praktisch vollständig zu extrahieren. Dabei sind die Verteilungskoeffizienten so gross, dass selbst bei einem Phasenverhältnis von wässriger:organischer Phase (z.B. 10%ige Lösung eines Dithiophosphorsäure-di-esters in Schwerbenzin) von 50:1 in einstufiger Extraktion weitestgehende Abtrennung der Elemente Cd und Hg erreicht wird. Dieses Ergebnis ist um so überraschender, da die Extraktion mit vergleichbaren Phosphorsäure-di-estern, anstalle der Dithiophosphorsäure-di-ester, völlig versagt (vgl. Vergleichsbeispiele 1–2).

Die metallischen Verunreinigungen, die in die organische Extraktionsmittelphase extrahiert worden sind, können im allgemeinen aus dieser Phase durch Rückextraktion mit Wasser oder sauren wässrigen Lösungen, z.B. verdünnten Mineralsäuren, wieder entfernt werden. Auf diese Weise kann das organische Extraktionsmittel in vorteilhafter Weise regeneriert werden, während die Schwermetallbestandteile in die wässrige Phase übergehen. Dazu kann vorteilhafterweise die organische, das Extraktionsmittel enthaltende Phase zunächst mit einer wässrigen Lösung einer alkalischen Verbindung extrahiert werden, bevor man sie mit verdünnter Mineralsäure, wie z.B. verdünnter Salzsäure, behandelt. Alkalischer Extrakt und saurer Extrakt können dann vereinigt werden. Bei dem ersten der beiden Teilschritte werden Arsen und teilweise Cadmium extrahiert, während beim zweiten Schritt Cadmium und Quecksilber quantitativ entfernt werden. Durch Änderung der Reihenfolge oder Erhöhung der Zahl einzelner Schritte bei der Reextraktion der Schwermetalle aus der organischen Phase können bestimmte Schwermetalle in den Reextraktionslösungen angereichert werden. Aus den wässrigen Reextraktionslösungen können die Schwermetallionen durch Fällung, z.B. als Hydroxide oder Sulfide, abgeschieden und isoliert werden.

Die Erfindung wird durch die nachfolgenden Beispiele näher erläutert.

Beispiele 1–16

Durch Aufschluss von Rohphosphaten mit Salpetersäure nach dem Odda-Verfahren erhaltene und geklärte Muttersäuren werden mit gasförmigem Ammoniak auf die in der nachfolgenden Tabelle angegebenen pH-Werte (der phosphorsauren Phase) eingestellt. Dazu werden die in Tabelle 1 aufgeführten erfindungsgemässen Extraktionsmittel in den dort angegebenen Mischungsverhältnissen von anorganischer Phase zu organischer Phase zwischen 5:1 und 50:1 gegeben und durch 3–5 min langes intensives Vermischen mit einem Rührgerät behandelt. Die Gew.-% der Verbindungen A beziehen sich auf das Verdünnungsmittel B. Die Extraktionstemperaturen betragen 25 °C, mit Ausnahme der Beispiele 8 und 9. Hier wurde eine Temperatur von 70 °C gewählt.

Anschliessend werden die Proben 2–5 min zentrifugiert und die zweiphasigen Gemische im Scheidetrichter getrennt. Die erhaltenen phosphorsauren Lösungen werden mit etwas konzentrierter Salzsäure vermischt und mittels Atomabsorption analysiert. Die gefundenen Schwermetallgehalte werden auf die ammoniakbehandelte Muttersäure umgerechnet bzw. auf die organische Extraktionsmittelphase bezogen.

Die nachfolgende Tabelle 1 gibt die Einzelheiten und Ergebnisse der durchgeführten Beispiele 1–16 in zusammengefasster Form wieder.

Beispiele 17–18

Analog den Beispielen 1–14 hergestellte und geklärte Muttersäuren werden mit Ammoniak auf pH 1,1 eingestellt und mit Dithiophosphorsäure-di-(2-ethylhexyl)-ester (10 Gew.-% in Petroleumbenzin, Kp. 100–140 °C) wie im Beispiel 11 beschrieben extrahiert. Die resultierende organische Phase wird abgetrennt und anschliessend mit konz. Salzsäure im Gew.-Verhältnis 20:1 bei Raumtemperatur reextrahiert. Dazu wird das Gemisch aus organischer Phase und konz. Salzsäure 5 Minuten lang durch Rühren intensiv vermischt, danach zentrifugiert. Die abgetrennte organische Phase weist vor und nach der Reextraktion die in der Tabelle 2 zusammengefasst wiedergegebenen Cd-Gehalte auf:

Tabelle 2

| Beispiel-Nr. | Cd-Gehalt (µg Cd/g organische Phase) vor der Extraktion | nach der Extraktion |
|---|---|---|
| 17 | 24 | 1,2 |
| 18 | 59 | 1 |

Vergleichsbeispiele 1–3

Analog den Beispielen 1–16 hergestellte und geklärte Muttersäure wird mit Ammoniak auf pH 1,1 eingestellt und mit Phosphorsäure-di-(2-ethylhexyl)-ester (Vbg. C) bzw. 2-Mercapto-benz-thiazol (Vbg. D) in 10 Gew.-%iger organischer Lösung in den in der Tabelle 3 angegebenen organischen Verdünnungsmitteln bei Raumtemperatur im Mi-

Tabelle 3

| Vergleichsbeisp. Nr. | Organ. Verdünnungsmittel | Cd-Gehalt (µg/g Lösung) Phosphorsaure Phase vor der Extraktion | nach der Extraktion | Organ. Phase nach der Extraktion |
|---|---|---|---|---|
| 1 (Vbg. C) | Petroleumbenzin (Kp. 100–140 °C) | 12,69 | 11,15 | 0,1 |
| 2 (Vbg. C) | Tributylphosphat | 12,69 | 13,31 | 0,6 |
| 3 (Vbg. D) | Tributylphosphat | 10,0 | 10,2 | 7,8 |

Tabelle 1

| Beispiel Nr. | pH-Wert | Extraktionsmittel Vbg. A*) [Gew.-%] | Verdünn. mittel B**) | Verhältnis anorg.: org. Phase (Gew. Teile) | Cd-Gehalt (µg Cd/g Lösung) Phosphorsaure Phase vor der Extrakt. | nach der Extrakt. | Org. Phase | Hg-Gehalt (µg /g Lösung) Phosphorsaure Phase vor der Extrakt. | nach der Extrakt. |
|---|---|---|---|---|---|---|---|---|---|
| 1 | 1,3 | 10 $A_1$ | $B_1$ | 10:1 | 3,85 | 0,11 | 36 | 0,055 | <0,011 |
| 2 | 1,3 | 10 $A_1$ | $B_1$ | 5:1 | 3,85 | <0,11 | 36 | 0,055 | <0,011 |
| 3 | 0,9 | 10 $A_1$ | $B_1$ | 10:1 | 4,28 | <0,11 | 21 | 0,064 | <0,011 |
| 4 | 1,1 | 20 $A_1$ | $B_1$ | 50:1 | 3,96 | 0,11 | 150 | 0,053 | <0,011 |
| 5 | 1,15 | 10 $A_1$ | $B_2$ | 10:1 | 4,09 | <0,11 | 31 | 0,055 | 0,011 |
| 6 | 1,1 | 10 $A_1$ | $B_3$ | 10:1 | 4,07 | <0,11 | 33 | 0,066 | <0,011 |
| 7 | 1,1 | 10 $A_1$ | $B_4$ | 10:1 | 4,00 | <0,11 | 36 | 0,056 | <0,011 |
| 8 | 1,1 | 10 $A_1$ | $B_5$ | 10:1 | 3,85 | <0,11 | 30 | 0,055 | <0,011 |
| 9 | 0,9 | 10 $A_1$ | $B_5$ | 10:1 | 4,08 | <0,11 | 28 | 0,066 | <0,011 |
| 10 | 0,5 | 10 $A_1$ | $B_1$ | 10:1 | 12,02 | 5,35 | 60 | nicht bestimmt | nicht bestimmt |
| 11 | 0,7 | 10 $A_1$ | $B_1$ | 10:1 | 12,09 | <0,11 | 120 | nicht bestimmt | nicht bestimmt |
| 12 | 1,1 | 100 $A_1$ | – | 10:1 | 4,05 | <0,11 | 35 | 0,055 | <0,011 |
| 13 | 1,1 | 10 $A_2$ | $B_1$ | 10:1 | 3,85 | <0,11 | 27 | 0,066 | <0,011 |
| 14 | 1,1 | 10 $A_3$ | $B_1$ | 10:1 | 3,83 | 1,98 | 21 | 0,066 | 0,033 |
| 15 | 1,0 | 10 $A_4$ | $B_1$ | 10:1 | 10,0 | 0,11 | 110 | 0,050 | <0,011 |
| 16 | 1,1 | 10 $A_5$ | $B_2$ | 10:1 | 11,0 | <0,11 | 98 | 0,050 | 0,022 |

*) $A_1$ = Dithiophosphorsäure-di-(2-ethylhexyl)-ester
$A_2$ = Dithiophosphorsäure-di-isotridecylester
$A_3$ = Dithiophosphorsäure-di-sek. butylester
$A_4$ = Cyclohexyl-dithiophosphonsäure-O-n-butylester
$A_5$ = Di-(tricyclo-(5,2,1,0,$^{26}$)decenyl)-dithiophosphinsäure (Isomerengemisch)

**) $B_1$ = Petroleumbenzin (Kp. 100–140°C)
$B_2$ = Tributylphosphat
$B_3$ = 1,1,2,2-Tetrabromethan
$B_4$ = Heizöl EL
$B_5$ = gereinigtes Schwerbenzin (Kp. 230–320°C)

schungsverhältnis anorganische: organische Phase = 10:1 (Gew.-Teile) unter intensivem Vermischen durch Rühren extrahiert. Nach dem Verrühren und anschliessenden Zentrifugieren werden die Phasen getrennt. Die phosphorsaure Phase wird mit etwas konzentrierter Salzsäure vermischt und mittels Atomabsorption analysiert. Der ermittelte Cd-Gehalt wird auf die ammoniakbehandelte Muttersäure umgerechnet. Das Ergebnis ist in der Tabelle 3 zusammengefasst wiedergegeben.

**Patentansprüche**

1. Verfahren zur Abtrennung von Cadmium- oder Quecksilber-Verbindungen aus Rohphosphorsäuren, die durch Aufschluss von Rohphosphat mit Salpetersäure gewonnen und aus der die Hauptmenge des gebildeten Calciumnitrats entfernt wurde, dadurch gekennzeichnet, dass man diese Rohphosphorsäure mit Ammoniak auf einen pH-Wert zwischen 0,5 und 1,5 einstellt und die erhaltene phosphorsaure Lösung mit einer organischen Phosphorverbindung der Formel I,

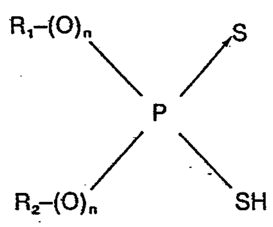

worin $R_1$ und $R_2$ gleich oder verschieden sind und gesättigte oder ungesättigte aliphatische, araliphatische oder aromatische Kohlenwasserstoffreste mit 1 bis 18 C-Atomen, die gegebenenfalls substituiert sind, und $R_1$ und $R_2$ zusammen 6 bis 36 C-Atome aufweisen sowie gegebenenfalls auch gemeinsam einen gegebenenfalls substituierten zweibindingen Rest bilden und n jeweils unabhängig voneinander 0 oder 1 bedeuten, oder einem Gemisch derselben extrahiert.

2. Verfahren nach Anspruch 1 unter Verwendung von Phosphorverbindungen der Formel I von Anspruch 1, worin $R_1$ und $R_2$ = $(C_1$–$C_{18})$-Alkyl, $(C_5$–$C_6)$-Cycloalkyl, Phenyl $(C_1$–$C_2)$-alkyl, Phenyl, durch $(C_1$–$C_4)$-Alkyl substituiertes Phenyl, Naphthyl, die gegebenenfalls durch Halogen, Hydroxy, Alkoxy, Carboxy oder $NO_2$ subtituiert sind, oder Tricyclodecenyl bedeuten und $R_1$ und $R_2$ zusammen 8 bis 24 C-Atome aufweisen.

3. Verfahren nach Ansprüchen 1 und 2, dadurch gekennzeichnet, dass man die Phosphorverbindungen der Formel I in Mengen von 0,05 bis 50 Gew.-%, bezogen auf die zu extrahierende phosphorsaure Phase, einsetzt.

4. Verfahren nach Ansprüchen 1 bis 3, dadurch gekennzeichnet, dass man die Verbindungen der Formel I im Gemisch mit inerten organischen Verdünnungsmitteln einsetzt.

5. Verfahren nach Anspruch 1, dadurch gekennzeichnet, dass das Gewichtsverhältnis von Verbindungen der Formel I zu inertem organischen Verdünnungsmittel 1:2 bis 1:50 beträgt.

6. Verfahren nach Ansprüchen 4 und 5, dadurch gekennzeichnet, dass man als inerte organische Verdünnungsmittel Petroleumbenzin, Kerosin, Heizöl EL, Dekalin, Tetrabromethan oder Xylol einsetzt.

7. Verfahren nach Ansprüchen 1 bis 6, dadurch gekennzeichnet, dass man die Extraktion bei Temperaturen zwischen 5 und 120 °C durchführt.

8. Verfahren nach Ansprüchen 1 bis 7, dadurch gekennzeichnet, dass man die Extraktion kontinuierlich oder diskontinuierlich durchführt.

9. Verfahren nach Ansprüchen 1 bis 8, dadurch gekennzeichnet, dass man das abgetrennte Extraktionsmittel von den Cadmium- oder Quecksilber-Verbindungen befreit und erneut zur Extraktion einsetzt.

**Claims**

1. A process for the separation of cadmium- or mercury-compounds from crude phosphoric acids which are produced by solubilization of crude phosphate by means of nitric acid and by removing the main fraction of the calcium nitrate thus formed which comprises adjusting the pH of the crude phosphoric acid by means of ammonia to a value between 0.5 and 1.5 and extracting the phosphoric acid solution with an organic phosphor compound of formula 1,

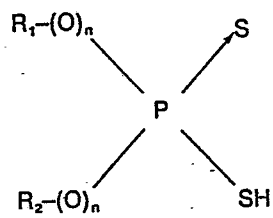

wherein $R_1$ and $R_2$ are identical or different and are saturated or unsaturated aliphatic, araliphatic or aromatic $(C_1$–$C_{18})$-hydrocarbon radicals which are optionally substituted, and $R_1$ and $R_2$ together have 6 to 36 C-atoms, and optionally form together a substituted twice bonded radical, and n is independently of one another 0 or 1, or with a mixture thereof.

2. A process as claimed in claim 1 by applying phosphor compounds of formula I of claim 1 wherein $R_1$ and $R_2$ are $(C_1$–$C_{18})$-alkyl, $(C_5$–$C_6)$-cycloalkyl, phenyl-$(C_1$–$C_2)$-alkyl, phenyl, phenyl which is substituted by $(C_1$–$C_4)$-alkyl, naphthyl which both are optionally substituted by halogen, hydroxy, alkoxy, carboxy or $NO_2$, or tricyclodecenyl and $R_1$ and $R_2$ together have 8 to 24 C-atoms.

3. A process as claimed in claims 1 and 2 which comprises using the phosphor compounds of formula I in amounts from 0.05 to 50% by weight relating to the phosphoric acid phase to be extracted.

4. A process as claimed in claim 1 to 3 which comprises using compounds of formula I as a mixture whith inert organic diluents.

5. A process as claimed in claim 1 thereby the weight ratio of the compounds of formula I to the inert organic diluents are in the range of 1:2 to 1:50.

6. A process as claimed in claim 4 and 5 which comprises using petroleum benzine, kerosene, fuel oil EL, decaline, tetra-bromo-ethane or xylene as inert organic diluent.

7. A process as claimed in claim 1 to 6 which comprises operating the extraction at a temperature in the range of 5 to 120 °C.

8. A process as claimed in claim 1 to 7 which comprises operating the extraction in a continuous or discontinuous manner.

9. A process as claimed in claims 1 to 8 which comprises removing the separated extraction-agent from the cadmium- and mercury-compounds and using it again for the extraction.

**Revendications**

1. Procédé de séparation des composés du cadmium ou du mercure à partir d'acides phosphoriques bruts, qui ont été obtenus par désagrégation d'un phosphate minéral avec de l'acide nitrique et dont la plus grande partie du nitrate de calcium formé a été éliminée, caractérisé en ce qu'on ajuste cet acide phosphorique brut avec de l'ammoniac à un pH entre 0,5 et 1,5 et en ce qu'on extrait la solution d'acide phosphorique obtenue avec un composé organique du phosphore répondant à la formule I,

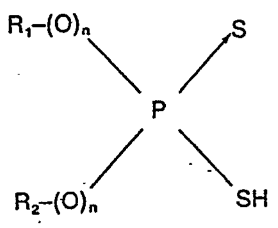

dans laquelle $R_1$ et $R_2$ sont identiques ou différents et désignent des radicaux hydrocarbonés saturés ou insaturés, aliphatiques, araliphatiques ou aromatiques en $C_1$ à $C_{18}$, qui sont substitués le cas échéant, et $R_1$ et $R_2$ présentent ensemble 6 à 36 atomes de carbone et peuvent aussi former ensemble le cas échéant un radical à deux liaisons éventuellement substitué, et n désigne à chaque fois indépendamment 0 ou 1, ou un mélange de celui-ci.

2. Procédé suivant la revendication 1, utilisant des composés du phosphore répondant à la formule I de la revendication 1, dans laquelle $R_1$ et $R_2$ sont des groupes alkyle en $C_1$–$C_{18}$, cycloalkyle en $C_5$ à $C_6$, phényle (alkyle en $C_1$–$C_2$), phényle substitué par un groupe alkyle en $C_1$ à $C_4$, naphthyle, qui sont substitués le cas échéant par un halogène, un groupe hydroxy, alcoxy, carboxy ou $NO_2$, ou un groupe tricyclodécényle, et $R_1$ et $R_2$ présentent ensemble 8 à 24 atomes de C.

3. Procédé suivant les revendications 1 et 2, caractérisé en ce qu'on utilise les composés du phosphore répondant à la formule I dans des quantités de 0,05 à 50% en poids, par rapport à la phase acide phosphorique à extraire.

4. Procédé suivant les revendications 1 à 3, caractérisé en ce qu'on utilise les composés répondant à la formule I en mélange avec des diluants organiques inertes.

5. Procédé suivant la revendication 1 caractérisé en ce que le rapport pondéral des composés répondant à la formule I au diluant organique inerte est de 1:2 à 1:50.

6. Procédé suivant les revendications 4 et 5, caractérisé en ce qu'on utilise comme diluant organique inerte de la benzine de pétrole, du kérosène, de l'huile de chauffage EL, de la décaline, du tétrabrom-ethane ou du xylène.

7. Procédé suivant les revendications 1 à 6, caractérisé en ce qu'on effectue l'extraction à des températures entre 5 et 120 °C.

8. Procédé suivant les revendications 1 à 7, caractérisé en ce qu'on effectue l'extraction en continu ou en discontinu.

9. Procédé suivant les revendications 1 à 8, caractérisé en ce qu'on débarasse l'agent d'extraction séparé des composés du cadmium ou du mercure et en ce qu'on l'utilise à nouveau pour l'extraction.